(19) Europäisches Patentamt

European Patent Office

Office européen des brevets

(11) **EP 4 685 210 A1**

(12) **EUROPEAN PATENT APPLICATION**
published in accordance with Art. 153(4) EPC

(43) Date of publication:
**28.01.2026 Bulletin 2026/05**

(21) Application number: **24774705.8**

(22) Date of filing: **07.03.2024**

(51) International Patent Classification (IPC):
***C10B 53/07*** (2006.01)     ***C08J 11/12*** (2006.01)
***C10G 1/10*** (2006.01)

(52) Cooperative Patent Classification (CPC):
**C08J 11/12; C10B 53/07; C10G 1/10**

(86) International application number:
**PCT/JP2024/008761**

(87) International publication number:
**WO 2024/195566 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.03.2023 JP 2023044451**

(71) Applicant: **NIPPON STEEL CORPORATION**
**Chiyoda-ku**
**Tokyo 100-8071 (JP)**

(72) Inventors:
• **WATANABE, Masahiko**
  **Tokyo 100-8071 (JP)**
• **OYAMA, Yuya**
  **Tokyo 100-8071 (JP)**
• **ISAKARI, Shota**
  **Tokyo 100-8071 (JP)**
• **KUBOTA, Yukihiro**
  **Tokyo 100-8071 (JP)**

(74) Representative: **Vossius & Partner**
**Patentanwälte Rechtsanwälte mbB**
**Siebertstrasse 3**
**81675 München (DE)**

(54) **METHOD FOR PRODUCING RECYCLED PRODUCT OF WASTE PLASTIC**

(57)     Provided is a method for producing a recycled product of a waste plastic, whereby it becomes possible to recycle a large amount of waste plastics. The method for producing a recycled product of a waste plastic comprises: charging the waste plastic in a coke oven at a predetermined maximum height of charge that is a height more than half of the width of the coke oven; performing carbonization for a predetermined coking time to produce a coke, tar, light oil, and gas; and removing the coke from the coke oven using a coke pusher machine. In the method, the value of the predetermined coking time is obtained by determining a relational expression between a maximum height of waste plastic charge and a coking time required for the completion of the carbonization and then calculating the predetermined coking time by substituting the predetermined maximum height of charge into the relational expression.

Fig. 2

**EP 4 685 210 A1**

**Description**

FIELD

The present invention relates to a method of production of recycled products of waste plastic using a coke oven.

BACKGROUND

In recent years, recycling of waste plastic has been sought from the viewpoint of contributing to effective use of resources and realization of a carbon neutral society. Among all of this, the method of carbonization of waste plastic in coke ovens to obtain recycled products such as coke, tar, light oil, and gas is advantageous in enabling processing of large amounts of waste plastic and enabling effective utilization of existing coke ovens. However, there is still not sufficient knowledge about the carbonization conditions suitable for recycling of waste plastic. Therefore, establishment of a technique for predicting the carbonization conditions suitable for recycling of waste plastic is desired.

PTL 1 describes a method of production of blast furnace coke comprising first charging feedstocks for coke into a coking chamber of a coke oven, then charging waste plastic into a oven-top space wherein the correlative relationship between the type and amount of waste plastic and the thermal decomposition time of the waste plastic is found in advance and the thermal decomposition of the waste plastic charged is made to be completed before discharge of the coke by setting the type, amount of charge, charging timing, and coking time of the waste plastic charged.

PTL 2 describes a method of production of fuel gas by carbonizing plastic mixed with coking coal or in alone.

[CITATION LIST]

[PATENT LITERATURE]

[PTL 1] Japanese Unexamined Patent Publication No. 2002-047494
[PTL 2] Japanese Unexamined Patent Publication No. 48-032902

SUMMARY

[TECHNICAL PROBLEM]

PTL 1 provides a method for first charging feedstocks for coke in a coking chamber of a coke oven, then further charging waste plastic, but does not focus on the carbonization conditions in the case of carbonizing only waste plastic. The method of joint use of feedstocks for coke as described in PTL 1 is not necessarily advantageous on the point of processing of large amounts of waste plastic. On the other hand, PTL 2 provides a method of carbonizing plastic alone. However, PTL 2 also does not teach specific carbonization conditions in the case of carbonizing only plastic. That is, a technique of carbonizing a matter to be treated comprised of substantially only waste plastic in a chamber of the coke oven (below, sometimes referred to simply as a "coke oven" for convenience) in which the coke is discharged from the coke oven after completion of carbonization has not yet been established in the prior art.

One aspect of the present invention has as its object the provision of a method of production of recycled products of waste plastic which solves the above technical issue and enables the recycling of a large amount of waste plastic by carbonizing a material to be treated substantially comprised of only waste plastic.

[TECHNICAL PROBLEM]

The gist of the present invention is as follows:

[1] A method of production of recycled products of waste plastic using a coke oven not charged with coal, the method comprising

charging the waste plastic into the coke oven by a predetermined maximum height of charge which is a height exceeding half of the width of the coke oven and performing carbonization over a predetermined coking time derived from the predetermined maximum height of charge so as to produce a coke, tar, light oil, and gas as the recycled products of waste plastic, and
discharging the coke from the coke oven by a coke pusher machine, wherein

the value of the predetermined coking time is obtained by

finding in advance a relational expression of a maximum height of charge when charging a waste plastic into a coke oven and a coking time required for completion of carbonization and

entering the predetermined maximum height of charge into the relational expression to calculate the predetermined coking time.

[2] The method according to the above [1], wherein

the carbonization is performed at a predetermined chamber temperature,

the relational expression is an expression for a relationship between: the maximum height of charge and a chamber temperature; and the coking time required for completion of carbonization, and

the predetermined maximum height of charge and the predetermined chamber temperature is entered into the relational expression to calculate the predetermined coking time.

[ADVANTAGEOUS EFFECTS OF INVENTION]

According to one aspect of the present invention, a method of production of recycled products of waste plastic which enables the recycling of a large amount of waste plastic by carbonizing a material to be treated substantially comprised of only waste plastic can be provided.

BRIEF DESCRIPTION OF DRAWINGS

FIG. 1 is a schematic view showing an example of a general configuration of a coke oven.

FIG. 2 is a schematic view showing an example of a general configuration of a coke oven.

FIG. 3 is a view showing a coke formed when carbonizing waste plastic by a pilot-scale coke oven.

FIG. 4 is a view showing a relationship between a maximum height of waste plastic charge and an actual measured required coking time in Example 1.

FIG. 5 is a view showing a relationship between an estimated value and an actual measured value of a required coking time of waste plastic in Example 1.

FIG. 6 is a view showing a relationship between a total amount of waste plastic charge and an actual measured required coking time in Comparative Example 1.

FIG. 7 is a view showing a relationship between an estimated value and an actual measured value of a required coking time of waste plastic in Comparative Example 1.

FIG. 8 is a view showing a relationship between an estimated value and an actual measured value of a required coking time of waste plastic in Example 2.

DESCRIPTION OF EMBODIMENTS

Below, an illustrative aspect of the present invention (sometimes also referred to as "the present embodiment" in the present disclosure) will be explained, but the present invention is not limited to the following aspect.

One aspect of the present invention provides a method of production of recycled products of waste plastic using a coke oven not charged with coal (that is, using a chamber not charged with coal). Note that, "not charged with coal" means coal not being intentionally charged. Therefore, a chamber in which coal is present as a residue (for example, deposited on the chamber walls) is also encompassed by a chamber not charged with coal. More specifically, "not charged with coal" means coal not being intentionally charged over the entire process of production of the recycled product. This method comprises charging waste plastic into a coke oven by a predetermined maximum height of charge which is a height over half of the width of the coke oven and performing carbonization over a predetermined coking time derived from that predetermined maximum height of charge so as to produce a coke, tar, light oil, and gas as the recycled products of waste plastic and taking out the coke from the coke oven by a coke pusher machine. The value of the predetermined coking time is obtained by finding in advance a relational expression of the maximum height of charge when charging a waste plastic selected for test use into a coke oven selected for test use and the coking time required for completion of carbonization and entering the predetermined maximum height of charge into the relational expression to calculate the predetermined coking time.

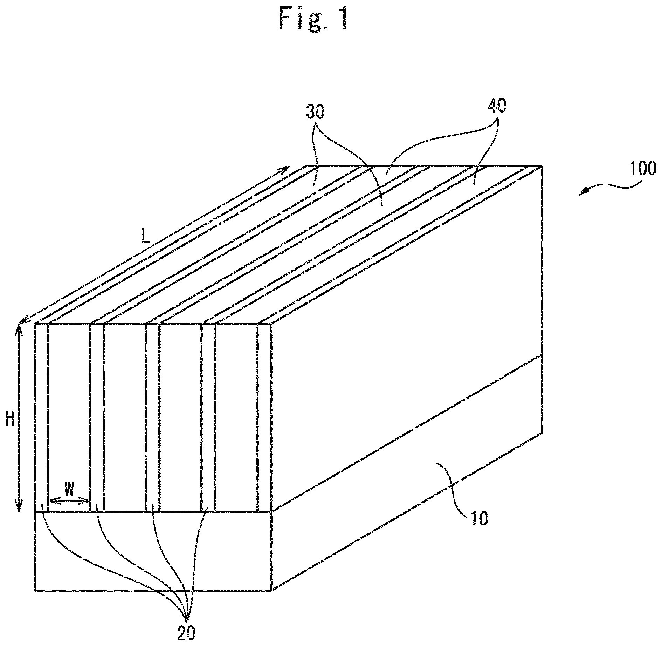

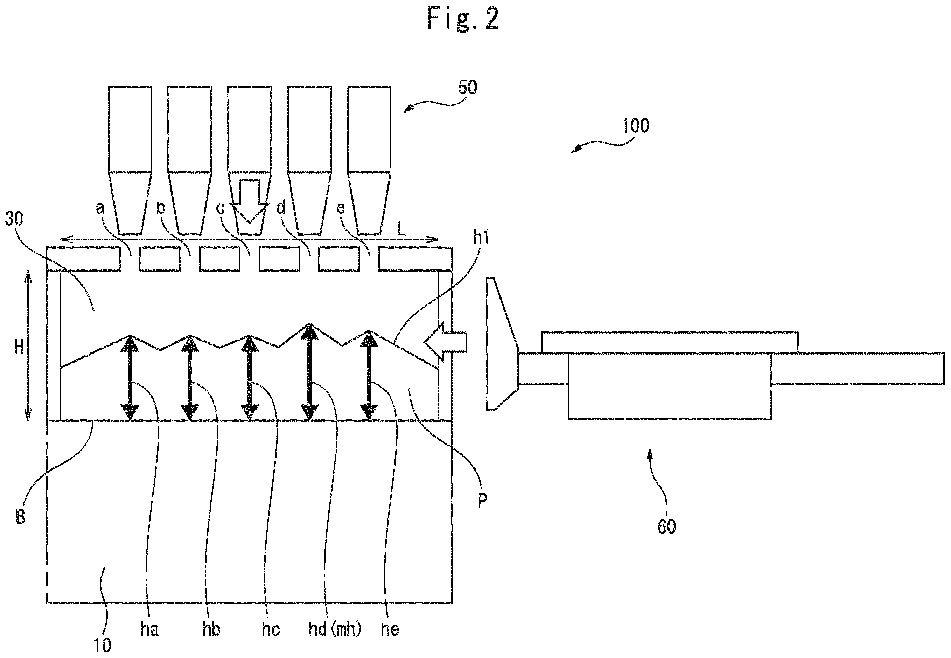

FIGS. 1 and 2 are schematic views showing an example of the general configuration of a coke oven. Referring to FIGS. 1 and 2, a coke oven 100 is generally configured by a regenerator 10 above which are alternately arranged coking chambers 30 and combustion chambers 40 through chamber walls 20. That is, each coking chamber is a chamber for carbonization. Each coking chamber 30 has a chamber width W, chamber height H, and chamber length L. Referring particularly to FIG. 2, waste plastic P is charged from a hopper 50 through charging holes "a", "b", "c", "d", and "e" to the coking chambers 30. There may be several charging holes for each coking chamber. FIG. 2 shows an example where there are five charging holes for each coking chamber, but the number of charging holes is not limited to this.

Referring in particular to FIG. 2, the height of waste plastic charge is the height from a bottom surface B of a coking chamber 30 to a top surface h1 of the charged waste plastic P calculated for each position in the chamber length L direction. Further, the "maximum height of charge mh" means the height of charge becoming the maximum one in the heights of charge calculated for each position in the chamber length direction. Usually, the heights of charge, as with the heights of charge ha, hb, hc, hd, he shown in FIG. 2, become higher right under the charging holes "a", "b", "c", "d", and "e". FIG. 2 shows an example where the height of charge hd is the maximum height of charge mh. Referring to FIGS. 1 and 2, the waste plastic P is carbonized in a coking chamber 30 by heat conducted from a combustion chamber 40 whereby a coke, tar, light oil, and gas are produced as recycled products. Referring in particular to FIG. 2, the coke is taken out by a coke pusher machine 60 in the chamber length L direction. The tar, light oil, and gas flow out from the coking chamber 30 to outside the oven through ascension pipes (not shown) where they are separated from each other.

When charging coal into a coke oven for carbonization, the dominant factor of the coking time required for completion of carbonization ("required coking time") is usually the heat conducted in the chamber width direction in the case where the height of coal charge (for example, the height from the bottom surface B in FIG. 2 to the top surface h1 of the waste plastic P) is higher than half of the chamber width of the coke oven (for example, the chamber width W in FIG. 1). Note that the "coking time required for completion of carbonization" ("required coking time") indicates the time required from the start of carbonization until the coke can be discharged. Further, "the case where the height of coal charge is higher than half of the chamber width of the coke oven" refers to the case where the height of coal charge is greater than the chamber width at the position of the maximum height of charge mh of the coke oven divided by 2. However, the inventors discovered that the heat conduction behavior in the case of using a coke oven to carbonize waste plastic differs from that of coal. Specifically, in carbonization of waste plastic, even if the height of charge is higher than half of the chamber width of the coke oven, the dominant factor in the required coking time is not the heat conduction in the chamber width direction like with the case of carbonizing coal, but the direction of the height of charge. The inventors further discovered that even when the total charged mass of the waste plastic differs, if the maximum height of charge is equal, the required coking time is equal. The reason why the heat conduction in the chamber width direction does not set the pace for the carbonization at the time of carbonization of the waste plastic is not certain, but it is guessed that the waste plastic near the chamber walls rapidly raised in temperature right after charging forms extremely porous and low heat conductive plate-like coke due to which heat conduction in the chamber width direction is obstructed. What requires the longest time until completion of carbonization is the waste plastic at the position with the maximum distance of heat conduction in the chamber height direction, therefore the maximum height of charge may be used as an indicator of the height of charge.

The inventors further discovered that by considering the chamber temperature in addition to the maximum height of charge, it is possible to estimate the required coking time more precisely, that is, the main factor governing the required coking time is the maximum height of charge and the subsidiary factor is the chamber temperature.

According to the method of the present embodiment, it is possible to prevent waste plastic from being discharged from the coke oven in a state of insufficient carbonization, therefore by carbonizing a matter to be treated substantially comprised of only waste plastic by a coke oven, it is possible to enable recycling a large amount of waste plastic while recovering to a maximum extent the hydrocarbon gases in particular from among the recycled products. Further, according to the method of the present embodiment, it is possible to recycle waste plastic utilizing a coke oven not charged with coal, for example, a nonoperating chamber or empty chamber, therefore effective utilization of a coke oven and recycling of a large amount of waste plastic can be simultaneously achieved. Note that, "carbonizing a matter to be treated substantially comprised of only waste plastic by a coke oven" means that the only material that is intentionally used is waste plastic. For example, coal etc. may be present as residual matter (for example, deposits on the chamber walls). The method according to one aspect is a method of producing recycled products of waste plastic without using coal.

<Waste Plastic>

The recycled products produced by the method of the present embodiment (that is, useful material able to be used as a resource) are produced by recycling waste plastic. In the method of the present embodiment, the waste plastic supplied for carbonization may be general waste or industrial waste. It is not limited in origin. Waste plastic may be derived from one or more of for example bottles (for example, PET bottles and bottles other than PET), bottle caps, packaging film, packaging materials (for example, styrene foam packaging materials), home electrical appliance products (for example, home electrical appliance housings), shipping materials (for example, pallets and containers), agricultural use plastic, automobile parts, pipes, cable coverings, etc. In one aspect, the waste plastic may be derived from a single origin. For example, it may be waste plastic derived from substantially only PET bottles, waste plastic substantially derived from only styrene foam packaging materials, etc. The waste plastic may also be comprised of two or more types of polymer materials.

The waste plastic may also be derived from two or more origins. According to the present embodiment, high quality recycled products may be produced by the reliable completion of carbonization even if the properties of the material to be treated are diverse.

Waste plastic is plastic recovered as various types of waste - either general waste or industrial waste. In one aspect, it is material complying with the criteria for sorting of plastics (for example, PET bottles and plastic packaging) covered by the Amended Container and Packaging Recycling Act enforced in April 2007 (Act Partially Amending the Act on the Promotion of Sorted Collection and Recycling of Containers and Packaging (Act No. 76 of June 15, 2006)). Such products complying with the sorting criteria are relatively uniform in a material composition, therefore can be advantageous for production of good quality recycled products.

Waste plastic may include thermoplastic resins and/or thermosetting resins. As thermoplastic resins, polyolefins (for example, polyethylene and polypropylene), polyesters (for example, polyethylene terephthalate, polyethylene naphthalate, and polybutylene terephthalate), acrylic resins, polyvinyl alcohol, polyvinyl chloride, polystyrene, polycarbonate, polyamide, polyacetal, fluororesins, etc. may be mentioned. As thermosetting resin, phenol resins, melamine resins, urea resins, polyurethane, epoxy resins, unsaturated polyester resins, etc. may be mentioned.

The moisture content of the waste plastic, from the viewpoint of carbonization efficiency, in one aspect, may be 30 mass% or less, 20 mass% or less, 15 mass% or less, or 10 mass% or less.

The form of the waste plastic charged into the coke oven is not limited. It may be the form when recovered as waste or may be shaped after recovery. In one aspect, the waste plastic may be charged into the coke oven as pellets etc. The waste plastic may be pretreated after recovery before being charged into the coke oven. As pretreatment, crushing, removal of foreign matter, granulation, adjustment of moisture content by drying, etc. may be mentioned. Foreign matter may be removed by removal of metals by magnetic sorters, removal of heavy matter by wind sorters, etc. The crushing and granulation may, for example, be performed using a compression type, shearing type, cutting type, impact type, or attrition type crusher.

<Carbonization>

In the method of the present embodiment, a nonoperating chamber, an empty chamber, or other coke oven not charged with coal is used. That is, a coke oven is charged with substantially only waste plastic. Due to this, processing of a large amount of waste plastic is possible.

In the method of the present embodiment, as recycled products, coke, tar, light oil, and gas are produced. If the waste plastic is decomposed by heat in a coking chamber of a coke oven, coke (carbon residue), tar, light oil, gas, and byproducts are produced. In one aspect, substantially the entire amount of the waste plastic can be recovered as useful ingredients comprised of coke, hydrocarbon oils (as tar or light oil), and gases (hydrocarbon gases, hydrogen gas, etc.). Coke, for example, can be used for sintering etc., hydrocarbon oils, for example, can be utilized as a starting material of various chemicals, while gases can be recovered from the top part of the coke oven and, for example, utilized as fuel for generating power etc. In a typical aspect, the recycled products can be comprised of a coke component of about 20 mass%, an oil component of about 40 mass%, and a gas component of about 40 mass%.

In the method of the present embodiment, a coke oven not charged with coal is charged with waste plastic, but the chamber temperature may also be a temperature similar to production of coke from coal. The chamber temperature, for example, the chamber bottom temperature, in one aspect, may be 900°C to 1200°C. In general, a polymer material finishes being decomposed by heat at 500°C or less. For example, in the polyethylene (PE), polystyrene (PS), polyethylene terephthalate (PET), and polypropylene (PP) forming the mainstream of recovered waste plastic, thermal decomposition is started at about 300°C or so and the thermal decomposition reaction finishes at about 420°C to 470°C or so. Further, even with polyvinyl chloride (PVC), which is sometimes contained in waste plastic and can produce harmful gases when burned, a primary thermal decomposition reaction occurs at about 250°C or more while a secondary thermal decomposition reaction occurs due to cleavage of the main chain at about 400°C. The carbonization at the high temperature using a coke oven is excellent in thermal decomposition ability of waste plastic, therefore even in the case the waste plastic includes a difficult to break down organic matter which may cause the burden on the environment, there is no inconvenience of discharge of harmful substances into the environment, and it becomes possible to produce clean recycled products containing various useful constituents. In particular, according to the method of the present embodiment, the coke is taken out after reliably completing the carbonization, therefore it is possible to process a large amount of waste plastic.

A coke oven usually has several charging holes. The waste plastic is charged into the coke oven from one or more charging holes. For example, it may be charged into the coke oven from two, three, four, or five charging holes. The maximum height of charge is the maximum value among the heights of charge at the plurality of charging holes. The maximum height of charge may also be the maximum height of charge or less when charging coal into the coke oven.

For example, in a coke oven with a chamber height of 5.5 m, the maximum height of charge may be 5.15 m.

In the method of the present embodiment, the coking time required for completion of carbonization (required coking time) may be specified using an indicator explained below. In one aspect, the time from the point of time of the start of carbonization to the point of time when black smoke is no longer discharged from an ascension pipe at the time of opening the charging holes may be deemed as the required coking time. The point of time when black smoke is no longer discharged from the ascension pipe at the time of opening the charging holes, in one aspect, may be specified as the point of time when opening the charging holes, observing the gases discharged from the ascension pipe at that time, and the gases change from a level where they appears black to a level where they do not appear black. The appearance of the gases discharged from the ascension pipe when opening the charging holes changes in accordance with the degree of progress in the carbonization. At the stage where the carbonization has not been completed, hydrocarbon based gases are discharged along with the carbonization of the waste plastic. Incomplete combustion of the hydrocarbon based gases causes the gases discharged from the ascension pipe to appear black. On the other hand, at the stage where the carbonization is completed, the gases discharged from the ascension pipe are mainly comprised of hydrogen and steam (that is, discharge of hydrocarbon based gases substantially ends) and appear white due to the steam. Therefore, whether the gases discharged from the ascension pipe appear black is a useful indicator for judging whether carbonization has been completed. The interval of observation of the gases may be set in accordance with the objective. For example, every 6 minutes (that is, 0.1 hour) etc. may be illustrated. Performing the carbonization until black smoke is no longer discharged from the ascension pipe when opening the charging holes is preferable from the viewpoint of recovering in particular the hydrocarbon based gases from among the recycled products to the maximum extent.

In the method of the present embodiment, in advance, the relational expression is found between the maximum height of waste plastic charge and the actual measured value of the required coking time when carbonizing waste plastic in the coke oven (in one aspect, the time from the point of time of start of carbonization to the point of time when black smoke is no longer discharged from the ascension pipe when opening the charging holes). For carbonization of waste plastic, an actual coke oven or a pilot-scale coke oven can be used, but a pilot-scale coke oven sometimes tends to be greater in heat removal compared with an actual oven, therefore from the viewpoint of estimating the required coking time more precisely, it is preferable to use an actual coke oven. The coke oven used may be the same or different between the test for deriving the relational expression and the actual processing of waste plastic.

The waste plastic for test use supplied for the carbonization for deriving the relational expression preferably has a material composition similar to or resembling the waste plastic supplied for actual recycling. As an example of the waste plastic supplied for actual recycling and the waste plastic for test use having similar or resembling material compositions, the case where these waste plastics are recovered by the same waste collection routes may be mentioned. The waste plastic for test use may also be an extracted part of the waste plastic supplied for actual recycling. If the density of granulated waste plastic differs between the waste plastic supplied for actual recycling and the waste plastic for test use, it is preferable to reselect the waste plastic for test use so that the densities become similar. The density can change depending on the material composition, but can also differ depending on the method of granulation.

In one aspect, the waste plastic for test use is subjected to a carbonization test under several carbonization conditions changed in at least the maximum height of charge, and the required coking time (in one aspect, the time from the point of time of start of carbonization to the point of time when black smoke is no longer discharged from the ascension pipe when opening the charging holes) is measured. The carbonization test, for example, may be performed under several carbonization conditions changed in only the maximum height of charge. For example, it may be performed under several carbonization conditions changed in the maximum height of charge and chamber temperature. The chamber temperature, for example, may be the chamber bottom temperature.

<Derivation of Relational Expression>

Based on the actual measured values of the required coking times obtained in the above carbonization tests, a relational expression of the maximum height of charge and required coking time is derived. The method of derivation of the relational expression is not limited to this, but for example it may include at least regression analysis using the maximum height of charge as an explanatory variable and the required coking time as an objective variable.

In one aspect, a relational expression between the maximum height of charge and required coking time is derived based on the actual measured values of the required coking time obtained by the above carbonization tests under the plurality of carbonization conditions changed in maximum height of charge. The method of derivation of the relational expression in this case is not limited to this, but for example may be simple regression analysis. The regression may be linear regression or nonlinear regression (for example, polynomial regression), but in one aspect, it is linear regression. In simple regression analysis, the maximum height of charge may be made the explanatory variable and the required coking time may be the objective variable. The regression is not limited to this, but, for example, may be linear regression by the least square method. In this case, the following formula (1) is obtained as the relational expression.

$$\text{Required coking time} = a \times [\text{maximum height of charge}] + c \quad (1)$$

(where, "a" is a regression coefficient derived from the relationship between the maximum height of waste plastic charge for test use and the required coking time while "c" is a constant term derived from the relationship between the maximum height of waste plastic charge for test use and the required coking time)

In another aspect, a relational expression between the maximum height of charge and chamber temperature and the required coking time is derived based on the actual measured values of the required coking time obtained by the above carbonization tests under the plurality of carbonization conditions changed in maximum height of charge and chamber temperature. The method of derivation of the relational expression in this case is not limited to this, but for example, may also be multiple regression analysis and other multivariate analysis. The regression may be linear regression or nonlinear regression, but in one aspect, it is linear regression. In multiple regression analysis, the maximum height of charge and the required coking time may be the objective variable. The maximum height of charge and the chamber temperature are not strongly correlated, therefore using these as explanatory variables can be advantageous on the point of significant multiple regression analysis.

The regression is not limited to this, but may be linear regression by for example the least square method. In this case, the following formula (2) is obtained as the relational expression.

$$\text{Required coking time} = a \times [\text{maximum height of charge}] + b \times [\text{chamber temperature}] + c \quad (2)$$

(where, "a" and "b" are regression coefficients derived from the relationship between: the maximum height of waste plastic charge for test use and the chamber temperature; and the required coking time, while "c" is a constant term derived from the relationship between: the maximum height of waste plastic charge for test use and the chamber temperature; and the required coking time)

Note that, in the multiple regression analysis, a relational expression with an intercept "c" (that is, constant term) of 0 by standardization may be obtained, but it is also possible to not perform the standardization.

The method for confirmation of whether simple regression analysis or multiple regression analysis was performed effectively is not particularly limited, but may be determined by an ordinary technique. The significance level may be selected in accordance with desire, but for example may also be 5% or 1%.

Note that, above, the case where the value of the maximum height of charge or the values of the maximum height of charge and chamber temperature are used as explanatory variables for estimating the required coking time was explained, but if there are other factors affecting the required coking time, it is also possible to employ these other factors in addition to the maximum height of charge and chamber temperature. As the other factors, the material, grain size, bulk density at the time of deposition, etc. of the waste plastic may be mentioned. For example, above, for the multiple regression analysis, the case of two explanatory variables was illustrated, but there may also be three or more explanatory variables. As additional explanatory variables, one or more of the material, grain size, bulk density at the time of deposition, etc. of the waste plastic may be used. As the relational expression in the case of performing multiple regression analysis employing as explanatory variables the maximum height of charge, chamber temperature, a first additional explanatory variable, and a second additional explanatory variable, for a total of four, the following formula (3) may be mentioned:

$$\text{Required coking time} = a \times [\text{maximum height of charge}] + b \times [\text{chamber temperature}] + \alpha \times [\text{first additional explanatory variable}] + \beta \times [\text{second additional explanatory variable}] + c \quad (3)$$

(where, "a", "b", "$\alpha$". and "$\beta$" are regression coefficients derived from the relationship between: the maximum height of waste plastic charge for test use, chamber temperature, first additional explanatory variable, and second additional explanatory variable; and the required coking time, while "c" is a constant term derived from the relationship between: the maximum height of waste plastic charge for test use, chamber temperature, first additional explanatory variable, and second additional explanatory variable; and the required coking time)

<Calculation of Predetermined Coking time in Actual Recycling>

By entering the conditions used for actual recycling into the relational expression derived by the procedure illustrated above, it is possible to calculate the estimated value of the required coking time for actual recycling. In one aspect, it is possible to enter into the formula (1) the maximum height of charge in actual recycling or to enter into the formula (2) the maximum height of charge in actual recycling and the value of the chamber temperature so as to calculate the estimated value of the required coking time for actual recycling. By performing carbonization over a predetermined coking time set in accordance with this estimated value in actual recycling, it is possible to reliably complete the carbonization of the waste plastic. In a typical form of actual recycling, the waste plastic is charged into the coke oven at one time.

EXAMPLES

Below, an illustrative aspect of the present invention will be explained by giving examples, but the present invention is not limited to these examples.

<Preparation of Waste Plastic>

As the waste plastic, plastic containers and wrapping waste was used. The waste plastic was granulated to form cylindrical granules having a diameter of about 35 mm and lengths of 30 to 100 mm or so. The bulk density of the waste plastic was 0.299 t/m$^3$ .

<Preliminary Study>

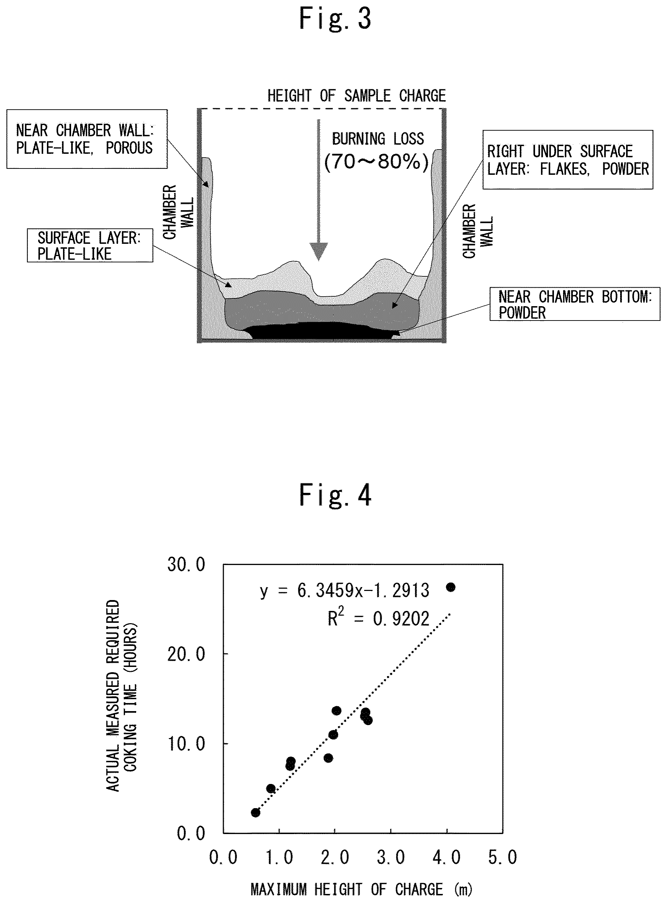

First, to study the behavior at the time of carbonization of waste plastic, the above waste plastic was carbonized by an electrically heated pilot-scale coke oven (chamber height 0.55 m, chamber length 0.6 m, chamber width 0.45 m) at 1050°C. FIG. 3 is a view showing the coke produced when carbonizing waste plastic by the pilot-scale coke oven. The height of waste plastic charge was 0.4 m. The coke height from the chamber bottom was about 20% to 30% or so of the sample charged height (that is, a burning loss of 70 to 80% or so). Next, the obtained coke was examined, whereupon it was learned that the state of the sample differed depending on the position. As shown in FIG. 3, near the chamber walls, a plate-like porous coke was formed. At the surface layer as well, a plate-like coke was formed. On the other hand, at the center part, flakes and powder of the sample were observed. The closer to the chamber bottom, the greater the tendency for formation of powder that was observed. These differences in the form of the sample are believed to have been due to the difference in rate of temperature rise. Here, near the chamber walls, where the rate of temperature rise is particularly fast, a porous form of the sample containing a large number of coarse pores is formed. In carbonization of waste plastic, the plate-like porous substance deposited on the chamber walls obstructs heat conduction in the chamber width direction. Due to this, it is guessed that heat conduction in the chamber height direction governs the speed of carbonization.

<Study of Relationship between Maximum Height of Charge or Total Amount of Charge and Required Coking Time>

Based on the above preliminary study, several (that is, several coke oven groups) of actual coke ovens were used to study the relationship between the maximum height of waste plastic charge or the total amount of waste plastic charge and the required coking time. For the study, actual coke ovens each provided with four to five (differing for each coke oven group) charging holes arranged at equal intervals, having chamber heights of 5.0 to 7.1 m (differing for each coke oven group), having chamber lengths of 14.6 to 16.5 m (differing for each coke oven group), and having chamber widths of 0.45 to 0.46 m (differing for each coke oven group) were used.

[Example 1: Estimation Based on Maximum Height of Charge]

Waste plastics with properties equal to those used in the above <Preliminary Study> were charged into actual coke ovens for carbonization according to the charging conditions 1 to 11 shown in Table 1. Note that in the amounts of charge in the table, the amounts of the plastic waste charge for each charging hole and total amounts will sometimes not correspond at first glance due to amounts being rounded off. As the actual measured required coking times, the times from the point of time of start of carbonization to the point of time when black smoke is no longer discharged from the ascension pipe when opening the charging holes were evaluated. At each charging condition, waste plastic was charged with the amount and height of charge shown in Table 1 from one or more of the four to five charging holes of the charging holes 1 to 4 or 1 to 5. Note that the maximum height of charge is the height of charge at one charging hole under charging conditions using just one charging hole and is the height of charge at the charging hole with the highest height of charge under charging conditions using two or more charging holes.

The above point of time when black smoke is no longer discharged from the ascension pipe when opening the charging holes was specified as the point of time when opening the charging holes and observing the gases discharged from the ascension pipe at that time and when the gases change from a level where they appear black to a level where they do not appear black. The level was examined every 6 minutes after opening the charging holes. The results are shown in Table 1.

As shown in Table 1, even if the total amounts of the waste plastic charge greatly differed, if the maximum heights of charge were the same extent, the actual measured required coking times were the same extent (for example, charging conditions 8 and 10). The results show that the actual measured required coking time is determined by not only the total amount of waste plastic charge, but also the maximum height of charge.

FIG. 4 is a view showing the relationship between the maximum height of charge of the waste plastic and the actual measured required coking time in Example 1. Based on the plot shown in FIG. 4, simple regression analysis was performed using the maximum height of charge as the explanatory variable and the required coking time as the objective variable. When performing linear regression by the least square method, the coefficient of determination was 0.9202, which is considered a sufficiently high value. Note that the P-value of the maximum height of charge used as the explanatory variable was sufficiently below 0.05 at $3.06 \times 10^{-6}$. It was judged that this could be employed as the explanatory variable. The obtained regression formula is as follows:

$$\text{Required coking time (hours)} = 6.3459 \times \text{maximum height of charge (m)} - 1.2913$$

As explained above, it is learned that the maximum height of charge and the actual measured required coking time are in a good linear correlative relation.

Next, the values of the maximum heights of charge of the charging conditions 1 to 11 were entered for the maximum height of charge of the above regression formula to calculate the estimated values of the required coking time. The calculated values are shown in Table 1.

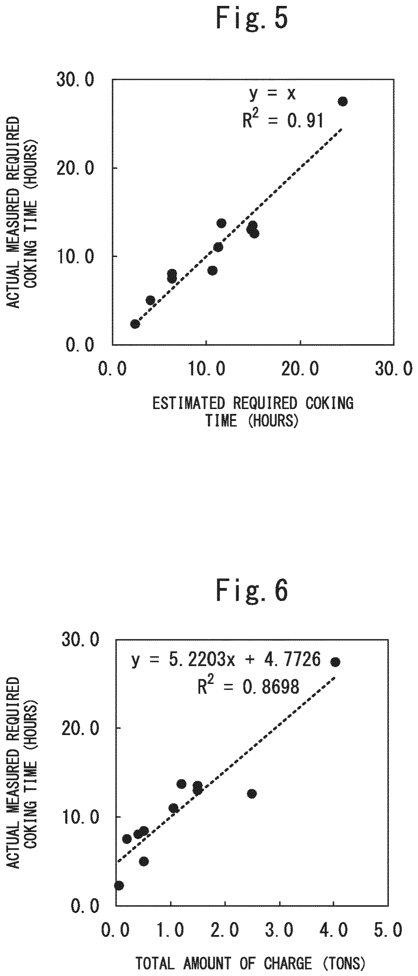

FIG. 5 is a view showing the relationship between the estimated value and actual measured value of the required coking time of waste plastic in Example 1. When linearly approximating the plot shown in FIG. 5 by the least square method, the $R^2$ value was 0.91. The actual measured value and estimated value showed a good correlation. From this, it will be understood that in carbonization of waste plastic, it is not heat conduction in the chamber width direction such as with carbonization of coal in the usual coke production, but heat conduction in the chamber height direction that governs the speed of progression of carbonization and that high precision estimation of the required coking time becomes possible based on the maximum height of charge.

[Comparative Example 1: Estimation Based on Total Amount of Charge]

Based on the actual measured required coking times obtained in Example 1, the relationship between the total amount of waste plastic charge and the actual measured required coking time was plotted. FIG. 6 is a view showing the relationship between the total amount of waste plastic charge and actual measured value of the required coking time in Comparative Example 1. Based on the plot shown in FIG. 6, simple regression analysis was performed using the total amount of charge as the explanatory variable and the required coking time as the objective variable. When performing linear regression by the least square method, the coefficient of determination was 0.8698, which is considered a value remarkably lower compared with Example 1. Note that the P-value of the total amount of charge used as the explanatory variable was sufficiently below 0.05 at $2.83 \times 10^{-5}$. It was judged that this could be employed as the explanatory variable. The obtained regression formula is as follows:

$$\text{Required coking time (hours)} = 5.2203 \times \text{total amount of charge (ton)} + 4.7726$$

As explained above, the result was the correlative relation between the total amount of charge and the actual measured required coking time is smaller than the correlative relationship between the maximum height of charge and the actual measured required coking time ($R^2 = 0.9202$).

Next, the values of the total amounts of charge of the charging conditions 1 to 11 were entered for the total amounts of charge of the above regression formula to calculate the estimated values of the required coking time. The calculated estimated values are shown in Table 1.

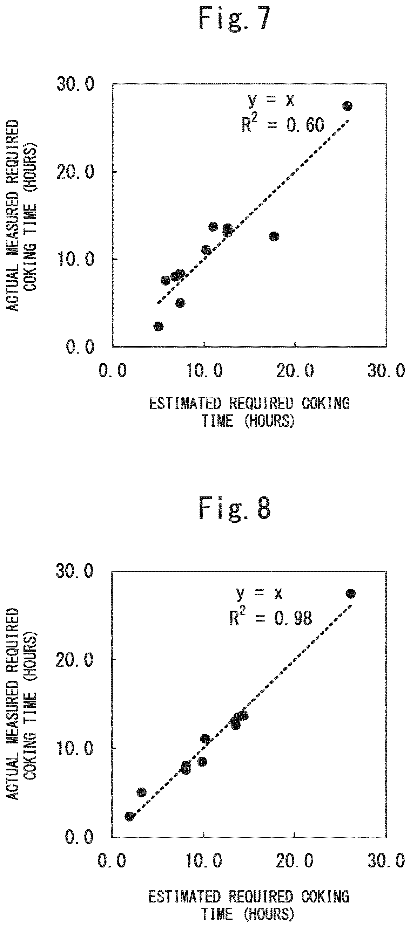

FIG. 7 is a view showing the relationship between the estimated value and actual measured value of the required coking time of waste plastic in Comparative Example 1. When linearly approximating the plot shown in FIG. 7 by the least square method, the $R^2$ value was 0.60. The precision fell from the time of use of the maximum height of charge as a variable. From the results, it will be understood that it is not possible to estimate the required coking time with a high precision based on the total amount of charge.

[Example 2: Estimation Based on Maximum Height of Charge and Chamber Temperature]

As shown in the above-mentioned FIG. 4, in Example 1, the maximum height of charge and the actual measured required coking time exhibit a good correlation, but to estimate the required coking time with a higher precision, in Example 2, studies were conducted further considering the chamber temperature in addition to the maximum height of charge. Note that as the chamber temperature the chamber bottom temperature was employed.

Regarding the actual measured required coking times obtained in Example 1, using the charging conditions 1 to 11, multiple regression analysis was performed using the maximum height of charge and chamber temperature as explanatory variables and the required coking time as the objective variable. The adjusted coefficient of determination obtained by linear regression by the least square method was 0.97, which is considered a sufficiently high value. Note that the P-values of the maximum height of charge and chamber temperature used as the explanatory variables were both sufficiently below 0.05 at $7.32 \times 10^{-8}$ and 0.002. It was judged that these could be employed as the explanatory variables. The obtained regression formula is as follows:

Required coking time (hours)=6.6×maximum height of charge (m)-0.042×chamber temperature (°C)+41.7

Next, the values of the maximum heights of charge and chamber temperatures of the charging conditions 1 to 11 were entered for the maximum height of charge and chamber temperature of the above regression equation to calculate estimated values of the required coking time. The calculated estimated values are shown in Table 1.

FIG. 8 is a view showing the relationship between the estimated value and actual measured value of the required coking time of waste plastic in Example 2. When approximating by a straight line the plot shown in FIG. 8 by the least square method, the $R^2$ value was 0.98 showing that the actual measured value and estimated value are correlated well. From this result, it is learned that by considering the chamber temperature in addition to the maximum height of charge, higher precision estimation becomes possible.

[Comparative Example 2]

In Comparative Example 2, except for considering the total amount of charge instead of the maximum height of charge, the same procedure was performed as Example 2 for study. Regarding the actual measured required coking time obtained in Example 1, multiple regression analysis was performed for the charging conditions 1 to 11 using the total amount of charge and chamber temperature as explanatory variables and the required coking time as an objective variable. The adjusted coefficient of determination obtained by linear regression by the least square method fell to 0.894. Note that, the P-values of the total amount of charge and the chamber temperature used as the explanatory variables were $1.51 \times 10^{-5}$ and 0.07. It was judged that the P-value of the chamber temperature cannot be employed as an explanatory variable.

From this result, it is learned that it is not possible to estimate the required coking time by a high precision based on the total amount of charge and chamber temperature.

[Table 1]

Table 1

| No. | Amount of charge (ton) | | | | | | Height of charge (m) | | | | | | Chamber bottom temp. (°C) | Actual measured required coking time (h) | Ex. 1 | | Comp. Ex. 1 | | Ex. 2 | |
|---|---|---|---|---|---|---|---|---|---|---|---|---|---|---|---|---|---|---|---|---|
| | Charging hole 1 | Charging hole 2 | Charging hole 3 | Charging hole 4 | Charging hole 5 | Total amount | Charging hole 1 | Charging hole 2 | Charging hole 3 | Charging hole 4 | Charging hole 5 | Maximum | | | Estimated value of required coking time based on maximum height of charge (h) | $R^2$ of estimated value and actual measured value | Estimated value of required coking time based on total amount of charge (h) | $R^2$ of estimated value and actual measured value | Estimated value of required coking time based on maximum height of charge and chamber temperature (h) | $R^2$ of estimated value and actual measured value |
| Charging condition 1 | 0.2 | | | | | 0.2 | 1.2 | | | | | 1.2 | 1000 | 7.5 | 6.4 | 0.91 | 5.8 | 0.60 | 8.1 | 0.98 |
| Charging condition 2 | | 0.2 | 0.2 | | | 0.4 | | 1.2 | 1.2 | | | 1.2 | 1000 | 8.0 | 6.4 | | 6.9 | | 8.1 | |
| Charging condition 3 | 0.1 | 0.1 | 0.1 | 0.1 | 0.1 | 0.5 | 0.9 | 0.9 | 0.9 | 0.9 | 0.9 | 0.9 | 1060 | 5.0 | 4.1 | | 7.4 | | 3.2 | |
| Charging condition 4 | | | 0.1 | | | 0.1 | | | 0.6 | | | 0.6 | 1050 | 2.3 | 2.4 | | 5.0 | | 1.9 | |
| Charging condition 5 | | | 0.5 | | | 0.5 | | | 1.9 | | | 1.9 | 1066 | 8.4 | 10.7 | | 7.4 | | 9.8 | |
| Charging condition 6 | | 0.6 | 0.6 | | | 1.2 | | 2.0 | 2.0 | | | 2.0 | 980 | 13.7 | 11.6 | | 11.0 | | 14.4 | |
| Charging condition 7 | | 0.5 | 0.5 | | | 1.1 | | 1.9 | 2.0 | | | 2.0 | 1071 | 11.0 | 11.3 | | 10.3 | | 10.2 | |
| Charging condition 8 | | 0.6 | 1.0 | 0.9 | | 2.5 | | 1.5 | 2.6 | 2.4 | | 2.6 | 1090 | 12.6 | 15.1 | | 17.7 | | 13.5 | |
| Charging condition 9 | | 0.7 | 1.3 | 2.1 | | 4.0 | | 1.3 | 2.4 | 4.1 | | 4.1 | 1024 | 27.5 | 24.6 | | 25.8 | | 26.1 | |
| Charging condition 10 | 0.8 | 0.7 | | | | 1.5 | 2.5 | 2.2 | | | | 2.5 | 1083 | 13.0 | 14.8 | | 12.6 | | 13.4 | |
| Charging condition 11 | | 0.8 | 0.8 | | | 1.5 | | 2.6 | 2.6 | | | 2.6 | 1078 | 13.5 | 15.0 | | 12.6 | | 13.8 | |

## Claims

1. A method of production of recycled products of waste plastic using a coke oven not charged with coal, the method comprising

   charging the waste plastic into the coke oven by a predetermined maximum height of charge which is a height exceeding half of the width of the coke oven and performing carbonization over a predetermined coking time derived from the predetermined maximum height of charge so as to produce a coke, tar, light oil, and gas as the recycled products of waste plastic, and
   discharging the coke from the coke oven by a coke pusher machine, wherein
   the value of the predetermined coking time is obtained by
   finding in advance a relational expression of a maximum height of charge when charging a waste plastic into a coke oven and a coking time required for completion of carbonization and
   entering the predetermined maximum height of charge into the relational expression to calculate the predetermined coking time.

2. The method of production of recycled products of waste plastic according to claim 1, wherein

   the carbonization is performed at a predetermined chamber temperature,
   the relational expression is an expression for a relationship between: the maximum height of charge and a chamber temperature; and the coking time required for completion of carbonization, and
   the predetermined maximum height of charge and the predetermined chamber temperature is entered into the relational expression to calculate the predetermined coking time.

# Fig. 1

EP 4 685 210 A1

# Fig. 2

# Fig. 3

HEIGHT OF SAMPLE CHARGE

NEAR CHAMBER WALL:
PLATE-LIKE, POROUS

BURNING LOSS
(70～80%)

RIGHT UNDER SURFACE
LAYER: FLAKES, POWDER

CHAMBER WALL

SURFACE LAYER:
PLATE-LIKE

CHAMBER WALL

NEAR CHAMBER BOTTOM:
POWDER

# Fig. 4

$y = 6.3459x - 1.2913$

$R^2 = 0.9202$

ACTUAL MEASURED REQUIRED COKING TIME (HOURS)

MAXIMUM HEIGHT OF CHARGE (m)

# Fig. 5

# Fig. 6

# Fig.7

# Fig.8

## INTERNATIONAL SEARCH REPORT

International application No.

**PCT/JP2024/008761**

| A. | CLASSIFICATION OF SUBJECT MATTER |
|---|---|

*C10B 53/07*(2006.01)i; *C08J 11/12*(2006.01)i; *C10G 1/10*(2006.01)i
FI:   C10B53/07; C10G1/10; C08J11/12

According to International Patent Classification (IPC) or to both national classification and IPC

| B. | FIELDS SEARCHED |
|---|---|

Minimum documentation searched (classification system followed by classification symbols)

C10B53/07; C08J11/12; C10G1/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 10-237454 A (NKK CORP.) 08 September 1998 (1998-09-08)<br>claim 1 | 1-2 |
| A | JP 2005-263983 A (JFE HOLDINGS INC.) 29 September 2005 (2005-09-29)<br>claim 1 | 1-2 |
| A | JP 2000-104075 A (NIPPON STEEL CORPORATION) 11 April 2000 (2000-04-11)<br>paragraph [0069] | 1-2 |
| A | JP 2000-136393 A (NIPPON STEEL CORPORATION) 16 May 2000 (2000-05-16)<br>paragraph [0055] | 1-2 |

☐ Further documents are listed in the continuation of Box C.      ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **09 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

### INTERNATIONAL SEARCH REPORT
**Information on patent family members**

International application No.

**PCT/JP2024/008761**

| Patent document cited in search report | | | Publication date (day/month/year) | Patent family member(s) | | | Publication date (day/month/year) |
|---|---|---|---|---|---|---|---|
| JP | 10-237454 | A | 08 September 1998 | (Family: none) | | | |
| JP | 2005-263983 | A | 29 September 2005 | (Family: none) | | | |
| JP | 2000-104075 | A | 11 April 2000 | (Family: none) | | | |
| JP | 2000-136393 | A | 16 May 2000 | EP | 1029889 | A1 | |
| | | | | paragraph [0059] | | | |
| | | | | AU | 5445099 | A | |
| | | | | CA | 2308710 | A1 | |
| | | | | TW | 506981 | B | |
| | | | | CN | 1286715 | A | |
| | | | | KR | 10-2001-0031507 | A | |
| | | | | US | 6436168 | B1 | |
| | | | | WO | 2000/012599 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002047494 A

- JP 48032902 A